# EUROPÄISCHE PATENTSCHRIFT

(11) **EP 2 849 868 B1**
(45) Veröffentlichungstag und Bekanntmachung des Hinweises auf die Patenterteilung: **24.07.2019**
(21) Anmeldenummer: 13730126.3
(22) Anmeldetag: 15.05.2013
(51) Int. Cl.: B01D 46/00, B01D 46/52, B01D 46/10

(54) **INNENRAUMFILTER UND FILTERELEMENT FÜR EINEN INNENRAUMFILTER**
CABIN AIR FILTER AND FILTER ELEMENT FOR A CABIN AIR FILTER
FILTRE D'ESPACE INTÉRIEUR ET ÉLÉMENT FILTRANT POUR FILTRE D'ESPACE INTÉRIEUR

(30) Priorität: 15.05.2012 DE 102012009595
(43) Veröffentlichungstag der Anmeldung: 25.03.2015
(73) Patentinhaber: Mann+Hummel GmbH, 71636 Ludwigsburg (DE)
(72) Erfinder: BAYERLEIN, Tina, 95326 Kulmbach (DE); PEKNY, Peter, 95339 Neuenmarkt (DE); RIEß, Elmar, 95482 Gefrees (DE); ATILGAN, Emrullah, 95460 Bad Berneck (DE)
(86) Internationale Anmeldenummer: PCT/EP2013/060112
(87) Internationale Veröffentlichungsnummer: WO 2013/171293

(56) Entgegenhaltungen:
- EP-A1- 1 254 694
- EP-A1- 1 504 803
- EP-A1- 1 616 736
- EP-A2- 1 172 240
- DE-A1- 10 231 696
- DE-A1-102009 059 782
- DE-U1-202005 011 727

## Beschreibung

### Technisches Gebiet

Die Erfindung betrifft einen Luftfilter, insbesondere einen Innenraumfilter, z. B. für ein Kraftfahrzeug, insbesondere in einer Klimaanlage sowie einen Filtereinsatz für einen solchen Filter.

### Stand der Technik

Aus der DE 10 2005 048 841 ist ein Innenraumfilter bekannt, bei dem eine Filterelementaufnahme einen Führungszapfen besitzt, der in einen Führungsschacht in einem Filterelement eintaucht, wenn das Filterelement entlang seiner Längsachse in die Filterelementaufnahme eingesteckt wird. Andere Innenraumfilter sind bekannt, bei denen Formgebungen auf einer Filterelementaufnahme komplementäre Formgebungen des Filterelements benötigen, damit das Filterelement beim Einschieben in die Filterelementaufnahme mit dieser dichtend abschließen kann.

Aus der DE 102 31 696 A1 ist ein Filtereinsatz bekannt, der eine Endkappe besitzt, die in einer Ausführungsform T-förmig gestaltet ist, sodass ein Steg in der Ebene des Filterelements vom Filterelement absteht.

Aus der DE 20 2005 011 078 U1 und der DE202005011727U1 ist ein Filterelement bekannt, das einen Abdichtstreifen umfasst, der z. B. dreiseitig um das Filterelement herum angebracht ist

Nachteilig bei derartigen Filtern ist, dass das Filterelement jeweils genau für den entsprechenden Filter angepasst sein muss. Z. B. muss ein Filtereinsatz für einen Innenraumfilter der DE 10 2005 048 841 seine Führungsaufnahmen genau an den Positionen der Führungszapfen aufweisen. Der Abdichtstreifen der DE 20 2005 011 078 U1 kann zwar geringe Unebenheiten ausgleichen, hat aber z. B. eine in sich gleichbleibende Dicke, gleiches gilt für den Steg der DE 102 31 696 A1. Wünschenswert wären Lösungen, bei denen ein Filterelement für unterschiedliche Konfigurationen der Filterelementaufnahme geeignet ist oder leichter anpassbar ist.

### Offenbarung der Erfindung

Innenraumfilter gemäß Anspruch 1 umfassend eine Filterelementaufnahme und ein Filterelement umfassend einen Faltenpack. Das Filterelement kann entlang einer Einschubrichtung in die Filterelementaufnahme eingeschoben werden oder in dieser verschoben werden. Das Filterelement umfasst ein Schwert, das sich in Einschubrichtung oder Verschiebungsrichtung vom Filterelement aus erstreckt. Bevorzugt ist das Schwert dabei so eigenstabil, dass es Druckkräfte vom Filterelement auf die Filterelementaufnahme übertragen kann, die zu einer Abdichtung des Filterelements in der Filteraufnahme führen können.

Das Filterelement kann Seitenbänder umfassen, die den Faltenpack auf mindestens zwei Seiten abschließen. Bevorzugt sind die Seitenbänder aus Vliesmaterial gefertigt.

Das Filterelement kann einen kunststoffumspritzten Faltenpack umfassen. Hierdurch wird ein Kunststoffrahmen für das Filterelement gebildet.

Das Schwert ist als flaches Kunststoffteil ausgebildet. Es kann hierbei z. B. aus mehreren Kunststoffen ausgebildet sein, z. B. einem weniger elastischen ersten Kunststoff und einem elastischeren zweiten Kunststoff, wobei der zweite Kunststoff das Schwert gegenüber der Filterelementaufnahme abdichtet. Ein solches System kann z. B. im 2K-Verfahren gefertigt werden.

Das Schwert kann auch Teil eines Kunststoffteils sein, das mit den Seitenbändern verbunden ist.

Das Schwert kann bei einem kunststoffumspritzten Faltenpack Teil des Kunststoffrahmens sein.

Das Schwert kann geneigt zur Ebene des Faltenpacks ausgebildet sein. Damit können z. B. in unterschiedlichen Höhen auf den Seiten des Filterelements angebrachte Dichtungen auf der in Einschubrichtung liegenden Seite verbunden werden.

Bevorzugt hat das Schwert eine Länge von mehr als 2 cm in Richtung der Einschub- oder Verschiebungsrichtung.

Das Schwert weist in der Filterelementebene eine von der rechteckigen Form abweichende, asymmetrische Form auf. Das Schwert ist an eine nichtrechteckige, asymmetrische Kontur eines Gehäuses angepasst.

Gelöst wird die Aufgabe durch ein Filterelement für einen Innenraumfilter mit den dargestellten Merkmalen für insbesondere das Schwert.

### Kurze Beschreibung der Zeichnungen

Weitere Vorteile, Merkmale und Einzelheiten der Erfindung ergeben sich aus der nachfolgenden Beschreibung, in der Ausführungsbeispiele und Vergleichsbeispiele der Erfindung anhand der Zeichnung näher erläutert werden. Es zeigen
- Figur 1: ein Filterelement für einen Innenraumfilter mit einem Schwert in Längsrichtung des Filterelements, wobei das Schwert als Kunststoffteil am Filterelement angebracht ist;
- Figur 2: ein Filterelement für einen nicht erfindungsgemäßen Innenraumfilter mit einem Schwert in Längsrichtung des Filterelements, wobei das Schwert aus dem Filtermedium des Faltenpacks des Filterelements gefertigt ist;
- Figur 3: ein Filterelement für einen nicht erfindungsgemäßen Innenraumfilter mit einem Schwert in Längsrichtung des Filterelements, wobei das Schwert aus Schaumstoff gefertigt ist;
- Figur 4 a) und b): sowie Figur 5 a) und b) alternative Gestaltungsformen eines Filterelements für einen nicht erfindungsgemäßen Innenraumfilter, die eine einfache Anpassung an Geometrien einer Filterelementaufnahme ermöglichen.

In den Figuren sind gleiche Bauteile mit gleichen Bezugszeichen versehen.

### Ausführungsform(en) der Erfindung

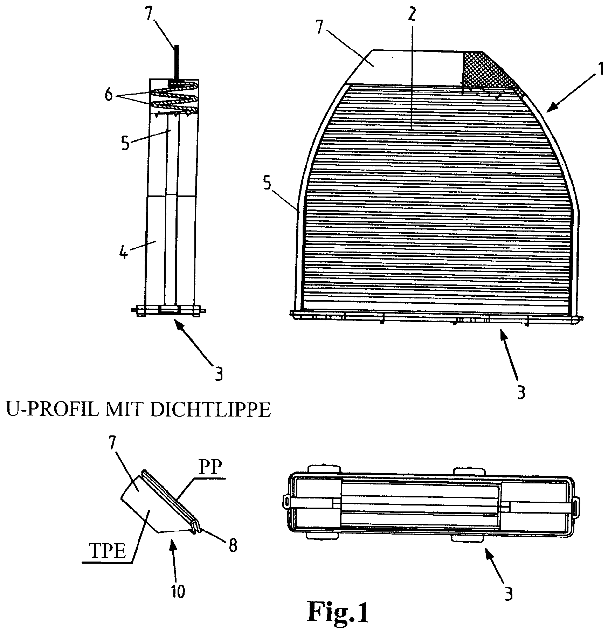

Figur 1 zeigt ein Filterelement 1 für einen Innenraumfilter mit einem Schwert 7 in Längsrichtung des Filterelements 1, wobei das Schwert 7 als Kunststoffteil 10 am Filterelement 1 angebracht ist. Das Filterelement 1 umfasst einen Faltenpack 2, der sich in Einschubrichtung des Filterelements verjüngt. Eine Seite des Filterelements 1 ist mit einer Frontplatte 3 versehen, die im eingebauten Zustand den Abschluss nach außen darstellt und eine Filterelementaufnahme verschließt. Der Faltenpack umfasst eine Vielzahl von Falten 6 eines Filtermediums. Als Filtermedium kann Papier oder Vlies dienen, das Filtermedium kann Adsorbentien, z. B. Aktivkohle, umfassen. Der Faltenpack 2 ist an den Stirnkanten mit Seitenbändern 4 versehen, die die Falten abschließen, ggf. einen Abschluss und eine Versiegelung des Filtermediums darstellen, wenn dieses z. B. Aktivkohle enthält. Die Seitenbänder 4 können z. B. aus Vlies gefertigt sein. Auf den beiden Seitenbändern 4 ist eine Dichtung 5 aufgebracht, z. B. ein Schaumstoffband, das die seitliche Abdichtung des Filterelements 1 in der Filterelementaufnahme realisiert. Die Abdichtung der in Einschubrichtung hinteren Seite des Filterelements 1 wird durch ein Schwert 7 realisiert. Das Schwert ist Teil eines Kunststoffteils 10 und kann mit einem U-förmigen Bereich am Filterelement 1 befestigt sein. Die letzte Falte 6 des Faltenpacks 2 kann in den U-förmigen Bereich eingesteckt oder verklebt sein. Das Kunststoffteil 10 kann mit den Seitenbändern 4 verbunden sein, z. B. verklebt oder verschweißt. In einer alternativen Bauform könnte der Faltenpack 2 auch mit Kunststoff umspritzt sein, wobei dadurch die Seitenbänder ersetzt werden könnten und das Kunststoffteil 10 ebenfalls, z. B. auch materialeinheitlich, mit dem so dargestellten Rahmen verbunden sein könnte. Das Schwert 7 kann in allen Varianten aus einem elastischen Kunststoff oder einer Kombination von elastischen und weniger elastischen Kunststoffen gefertigt werden. Insbesondere kann das Schwert im 2K-Verfahren aus zwei unterschiedlichen Kunststoffen gefertigt werden oder aus einem oder mehreren thermoplastischen Elastomeren. Durch ein solches Schwert 7 wird die Filterfläche verringert, allerdings ist insbesondere bei einer Form des Faltenpacks 2 wie in Figur 1 die Verringerung in einem Bereich des Faltenpacks, der eine geringere Breite aufweist und am Rand eventuell eine geringere Durchströmung hat. Für unterschiedliche Formgebungen auf der Seite der Filterelementaufnahme kann dann ein Filterelement 1, bei dem lediglich das Kunststoffteil 10 geändert werden muss, verwendet werden. Dem Nachteil der verringerten Filterfläche steht also ein Vorteil auf der Fertigungsseite gegenüber.

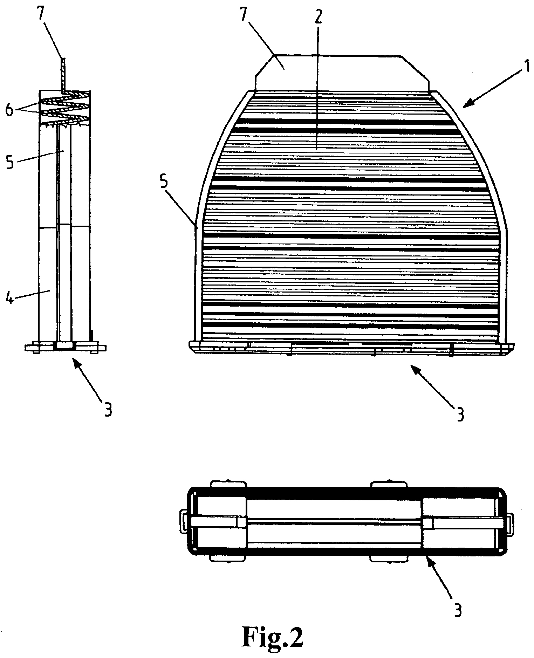

Figur 2 zeigt in einem Beispiel, welches das Verständnis der Erfindung erleichtert jedoch nicht zur Erfindung gehörig ist, ein Filterelement 1 für einen Innenraumfilter mit einem Schwert 7 in Längsrichtung des Filterelements 1, wobei das Schwert 7 aus dem Filtermedium des Faltenpacks 6 des Filterelements gefertigt ist. Hierdurch kann im Unterschied zur Variante der Figur 1 das Schwert 7 aus dem Filtermedium selber realisiert werden und auf ein Zusatzbauteil verzichtet werden.

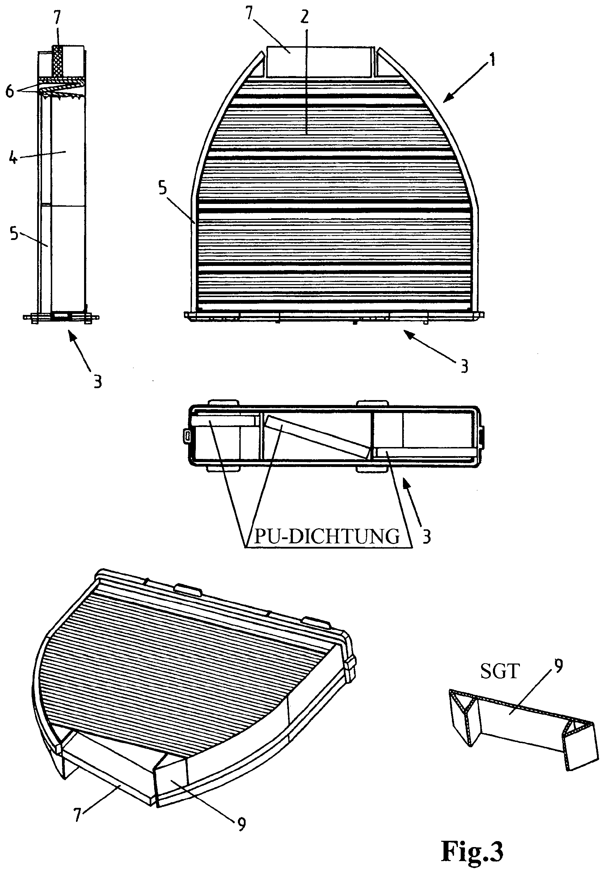

Figur 3 zeigt in einem Beispiel, welches das Verständnis der Erfindung erleichtert jedoch nicht zur Erfindung gehörig ist, ein Filterelement 1 für einen Innenraumfilter mit einem Schwert 7 in Längsrichtung des Filterelements, wobei das Schwert aus Schaumstoff gefertigt sein kann. Unabhängig vom Material des Schwerts 7 kann das Schwert 7 hierbei nicht nur in der Ebene des Faltenpacks 2 ausgebildet sein, sondern kann schräg zu dieser verlaufen. Hierdurch kann z. B. auch eine Dichtungskonfiguration realisiert werden, bei der die seitliche Abdichtung auf den beiden Seiten des Filterelements mit den Dichtungen 5 auf unterschiedlicher Höhe des Faltenpacks 2 verläuft. Besonders geschickt ist diese Variante, wenn für das Schwert 7 das Material der Dichtungen 5 verwendet werden kann, z. B. ein Schaumstoff. Die Variante in Figur 3 kann ein zusätzliches Kunststoffteil 9 umfassen, das zur seitlichen Abdichtung beitragen kann und als Träger für das Schwert dienen kann.

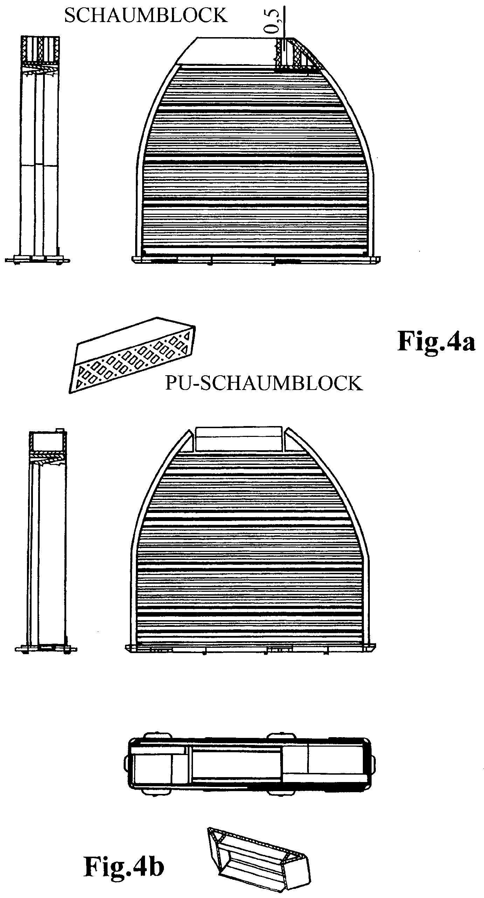

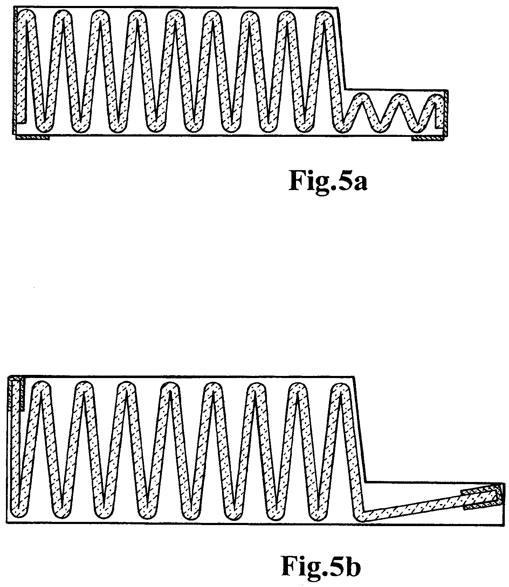

Figur 4 a) und b) sowie Figur 5 a) und b) zeigen in Beispielen, welche das Verständnis der Erfindung erleichtern jedoch nicht zur Erfindung gehörig sind, alternative Gestaltungsformen eines Filterelements 1 für einen Innenraumfilter, die eine einfache Anpassung an Geometrien einer Filterelementaufnahme ermöglichen.

In Figur 4 a) ist eine Variante dargestellt, bei der ein Schaumstoffblock mit Schwächungszonen eine Aufnahme von unebenen Bereichen der Filterelementaufnahme ermöglicht. Der Schaumstoffblock kann z. B. eine Vielzahl von in Filterelementebene liegenden Schaumstoffprismen umfassen oder eine Vielzahl von Vertiefungen oder Einschnitten.

Figur 4 b) zeigt ein Kunststoffendstück, das mit zwei Schwertern oder Lippen, möglicherweise auch unterschiedlicher Geometrie eine Anpassbarkeit an eine Filterelementaufnahme ermöglicht.

Figuren 5 a) und b) zeigen Varianten für ein Filterelement, bei denen das Filtermedium in Einschub- oder Verschiebungsrichtung derart geformt ist, dass es eine Anpassung an eine Filterelementaufnahme ermöglicht. Z. B. kann das Filtermedium mit einer gegenüber einem größeren Bereich des Filterelements verringerten Faltenhöhe ausgestattet sein, sodass hierdurch eine Anpassbarkeit an eine Filterelementaufnahme gegeben ist. Der Bereich verringerter Faltenhöhe kann dabei nicht nur, wie in Fig. 5 a) gezeigt, mit einer Faltenspitzenebene des Filterelements abschließen, sondern kann auch versetzt, z. B. mittig angebracht sein. Das Filtermedium bzw. der Faltenbalg kann im Bereich geringerer Faltenhöhe auf beiden Seiten von Seitenbändern gefasst sein. Der Bereich verringerter Faltenhöhe kann mit einem L-Winkel, wie in Fig. 5 a), oder einem U-Profil, wie in Fig. 5 b), abschließen.

## Patentansprüche

1. Innenraumfilter umfassend eine Filterelementaufnahme und ein Filterelement (1) umfassend einen Faltenpack (2), wobei das Filterelement (1) entlang einer Einschubrichtung in die Filterelementaufnahme eingeschoben werden kann, wobei das Filterelement (1) ein Schwert (7) umfasst, das sich in Einschubrichtung vom Filterelement aus erstreckt, wobei das Schwert (7) als flaches Kunststoffteil ausgebildet ist, wobei das Schwert (7) eine in der Filterelementebene asymmetrische Form aufweist, wobei das Schwert an eine asymmetrische Kontur der Filterelementaufnahme angepasst ist.

2. Innenraumfilter nach Anspruch 1, wobei das Filterelement (1) Seitenbänder (4) umfasst, die den Faltenpack (2) auf mindestens zwei Seiten abschließen.

3. Innenraumfilter nach Anspruch 1, wobei das Filterelement (1) einen kunststoffumspritzten Faltenpack (2) umfasst, wobei durch das Umspritzen ein Kunststoffrahmen gebildet wird.

4. Innenraumfilter nach Anspruch 2, wobei das Schwert (7) Teil eines Kunststoffteils (10) ist, das mit den Seitenbändern (4) verbunden ist.

5. Innenraumfilter nach Anspruch 3, wobei das Schwert (7) Teil des Kunststoffrahmens ist.

6. Innenraumfilter nach einem der vorherigen Ansprüche, wobei das Schwert (7) geneigt zur Ebene des Faltenpacks (2) ist.

## Claims

1. Cabin filter comprising a filter element receptacle and a filter element (1) comprising a pleated pack (2), wherein the filter element (1) is insertable into the filter element receptacle along an insertion direction, wherein the filter element (1) comprises a sword (7) extending in the insertion direction from the filter element, wherein the sword (7) is realized as a flat plastic part, wherein the sword (7) features an asymmetrical shape in the filter element plane, wherein the sword is adapted to an asymmetrical contour of the filter element receptacle.

2. Cabin filter according to claim 1, wherein the filter element (1) comprises side bands (4) closing the pleated pack (2) on at least two sides.

3. Cabin filter according to claim 1, wherein the filter element (1) comprises a plastic overmolded pleated pack (2), wherein a plastic frame is formed by the overmolding.

4. Cabin filter according to claim 2, wherein the sword (7) is part of a plastic part (10) connected to the side bands (4).

5. Cabin filter according to claim 3, wherein the sword (7) is part of the plastic frame.

6. Cabin filter according to one of the previous claims, wherein the sword (7) is inclined with regard to the plane of the pleated pack (2).

## Revendications

1. Filtre d'habitacle comprenant un logement pour élément filtrant et un élément filtrant (1) comprenant un ensemble de plis (2), l'élément filtrant (1) pouvant être inséré dans le logement pour élément filtrant tout le long d'un sens d'insertion, l'élément filtrant (1) comprenant une lame (7) s'étendant dans le sens d'insertion depuis l'élément filtrant, la lame (7) étant réalisée en une pièce en matière plastique plane, la lame (7) présentant une forme asymétrique dans le plan d'élément filtrant, la lame étant adaptée à un contour asymétrique du logement pour élément filtrant.

2. Filtre d'habitacle selon la revendication 1, l'élément filtrant (1) comprenant des bandes latérales (4) qui ferment l'ensemble de plis (2) sur au moins deux côtés.

3. Filtre d'habitacle selon la revendication 1, l'élément filtrant (1) comprenant un ensemble de plis (2) surmoulé de plastique, un cadre en matière plastique étant formé par le surmoulage.

4. Filtre d'habitacle selon la revendication 2, la lame (7) faisant partie d'une pièce en matière plastique (10) reliée aux bandes latérales (4).

5. Filtre d'habitacle selon la revendication 3, la lame (7) faisant partie du cadre en matière plastique.

6. Filtre d'habitacle selon l'une des revendications précédentes, la lame (7) étant inclinée par rapport au plan de l'ensemble de plis (2).
